(19) Europäisches Patentamt
European Patent Office
Office européen des brevets

(11) EP 0 991 952 B1

(12) FASCICULE DE BREVET EUROPEEN

(45) Date de publication et mention de la délivrance du brevet: **09.01.2002 Bulletin 2002/02**

(21) Numéro de dépôt: **98928400.5**

(22) Date de dépôt: **29.05.1998**

(51) Int Cl.$^7$: **G01S 3/74**, G01S 3/04

(86) Numéro de dépôt international: **PCT/FR98/01093**

(87) Numéro de publication internationale: **WO 98/55881 (10.12.1998 Gazette 1998/49)**

(54) **PROCEDE ET DISPOSITIF DE RADIOGONIOMETRIE COOPERATIVE EN TRANSMISSION**

VERFAHREN ZUR FUNKPEILUNG UND ZUSAMMENWIRKENDES ÜBERTRAGUNGSGERÄT

RADIOGONIOMETRY METHOD AND DEVICE CO-OPERATING IN TRANSMISSION

(84) Etats contractants désignés: **DE FI FR GB IT SE**

(30) Priorité: **03.06.1997 FR 9706801**

(43) Date de publication de la demande: **12.04.2000 Bulletin 2000/15**

(73) Titulaire: **Thales 75008 Paris (FR)**

(72) Inventeurs:
- **PIPON, François, Thomson-CSF F-94117 Arcueil (FR)**
- **MONOT, Jean-Jacques, Thomson-CSF F-94117 Arcueil (FR)**
- **CHEVALIER, Pascal, Thomson-CSF F-94117 Arcueil (FR)**
- **ASTE, Thierry, Thomson-CSF F-74117 Arcueil (FR)**

(74) Mandataire: **Lincot, Georges
Thomson-CSF Propriété Intellectuelle, Département Brevets, 13, Avenue du Président Salvador Allende
94117 Arcueil Cédex (FR)**

(56) Documents cités:
**WO-A-96/14588** **DE-A- 19 511 752**
**US-A- 4 728 959**

- **PATENT ABSTRACTS OF JAPAN vol. 097, no. 009, 30 septembre 1997 & JP 09 119970 A (MITSUBISHI ELECTRIC CORP;HARADA TOSHIRO; SHIMIZU YOJI), 6 mai 1997 & DATABASE WPI Section EI, Week 9728 Derwent Publications Ltd., London, GB; Class W01, AN 97-307581 & JP 09 119970 A (MITSUBISHI ELECTRIC CORP; HARADA TOSHIRO; SHIMIZU YOJI) , 6 mai 1997**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé et un dispositif de radiogoniométrie coopérative en transmission pour des formes d'ondes comportant un signal modulé en modulation linéaire ou pouvant être approximé comme tel, ce signal étant composé de trames comportant des séquences d'apprentissage connues du récepteur et des séquences d'informations utiles.

L'invention peut s'appliquer notamment aux réseaux de communications radiomobiles numériques cellulaires, tels que le GSM, ... Dans un tel contexte, une station de base peut effectuer une goniométrie sur chaque mobile en utilisant les bursts naturellement émis au cours de la communication, pour ensuite émettre de façon directive en direction de chaque mobile, à partir de la connaissance des directions d'arrivée goniométrées. Une telle procédure, basée sur la goniométrie de chacun des mobiles du réseau, permet ainsi de limiter les risques de brouillage envers les autres cellules et donne la possibilité d'introduire le mode SDMA (Spatial Division Multiple Access), où plusieurs utilisateurs peuvent utiliser la même fréquence au même moment.

Actuellement, plusieurs types de méthodes à haute résolution ou super résolution permettent d'effectuer la goniométrie en présence de plusieurs sources. Parmi ces méthodes, il est courant d'utiliser celles connues sous les noms de MUSIC, ESPRIT, Minimum Norm ou « Maximum de vraisemblance » pour la goniométrie haute résolution, et celle connue sous le nom de CAPON pour la goniométrie à super résolution.

A titre indicatif, une description de ces méthodes peut être trouvée dans les articles suivants.

La méthode MUSIC a été publiée dans l'article intitulé « Multiple Emitter Location and Signal Parameter Estimation » de la revue IEEE Trans. Ant. Prop., Vol AP-34, n° 3, pp 276-280, March 1986 ayant pour auteur M. R.D. SCHMIDT.

La méthode ESPRIT est connue de l'article intitulé « Estimation of Signal Parameters via Rotational Invariance Techniques » de la revue IEEE Transaction ASSP, Vol ASSP-37, n° 7, pp 984-995, July 1989 ayant pour auteurs MM. R. ROY, T. KAILATH.

La méthode Minimum Norm ou Modified FB2B (MFBCP) est connue de l'article intitulé « Estimating the Angles of Arrivai of Multiple plane waves » de la revue IEEE Trans. Aerosp. Elect-syst., Vol AES-19, n° 1, pp 134-138, January 1983 ayant pour auteurs MM. R. KUMARESAN, D. W. TUFTS.

La méthode Maximum de Vraisemblance est connue de l'article intitulé « Maximum Likelihood Localizated of Multiple Sources by Alternating Projection» de la revue IEEE Trans. ASSP, Vol ASSP-36, n° 10, pp 1553-1560, October 1988 ayant pour auteurs MM. I. ZISKIND, M. WAX.

La méthode CAPON, MV, MLM est connue de l'article intitulé « High Resolution Frequency - Wave number Spectrum Analysis » de la revue IEEE, Vol n° 8, pp 1408-1418, August 1969 ayant pour auteur M. J. CAPON.

Néanmoins, ces méthodes sont limitées par le nombre de capteurs du réseau utilisé. Expérimentalement, avec N capteurs, il est possible de séparer N/2 trajets arrivant sur le réseau. Or, lorsque plusieurs sources sont présentes, chacune de ces sources peut être associée à plusieurs trajets de propagation :

- réflexions sur les couches ionosphériques pour la gamme de fréquence HF,
- réflexions sur les obstacles (immeubles, collines,...) dans des environnements de type urbain ou montagneux pour les autres gammes de fréquence,

et le nombre de trajets associés à toutes les sources peut devenir trop important pour que la méthode de goniométrie puisse tous les séparer.

L'invention a pour but d'isoler chacune des sources parvenant sur le réseau, afin que la goniométrie n'ait à traiter que les trajets associés à une seule source.

A cet effet, l'invention a pour objet un procédé de radiogoniométrie coopérative en transmission dans un récepteur de radiogoniométrie pour système de radiocommunication comportant plusieurs sources d'émission, le récepteur étant du type comportant un réseau de capteurs couplé à un radiogoniomètre caractérisé en ce qu'il comporte :

- une première étape consistant à numériser le signal reçu par chaque capteur,
- une deuxième étape consistant à effectuer une prise de synchronisation sur les signaux issus de la première étape;
- et une troisième étape consistant, à partir des séquences d'apprentissage insérées dans les formes d'ondes émises par chaque source, à isoler la contribution de chaque source dans les signaux capteurs afin de n'effectuer la goniométrie que sur une seule source.

Elle a également pour objet un dispositif pour la mise en oeuvre du procédé précité.

Le procédé décrit dans l'invention permet d'améliorer les performances de la goniométrie en présence de plusieurs sources dans un contexte de transmission. Elle a également pour avantage de permettre la localisation des mobiles, pour émettre de façon directive en direction de chaque mobile à partir de la connaissance de la direction

d'arrivée des mobiles goniométrés. Elle permet de diminuer la puissance d'émission à portée constante, où à augmenter la portée d'émission à puissance constante et donc de diminuer le brouillage envers les autres cellules.

Comme autre avantage, le procédé selon l'invention permet de connaître à quelle source correspond les trajets goniométrés, ce qui n'est pas le cas avec une goniométrie classique où l'une des difficultés est d'attribuer une source à chaque trajet détecté car les directions d'arrivée associées à une même source peuvent être totalement différentes.

Lorsque la propagation se fait selon un trajet dominant, la méthode de goniométrie mise en oeuvre après l'étape d'isolement de chaque source peut être classique, par formation de voies ou par interférométrie comme cela est décrit par exemple dans l'article intitulé « Les techniques d'interférométrie utilisées dans les radiogoniomètres à Thomson-CSF » publiée dans la Revue Technique Thomson-CSF, Vol. 19, n° 2, pp 249-287, Juin 1987.

D'autres caractéristiques et avantages de l'invention apparaîtront dans la description qui suit faite en regard des dessins annexés qui se présentent :

- la figure 1, la composition d'un burst GSM,
- la figure 2, les différentes étapes du procédé de radiogoniométrie coopérative selon l'invention sous la forme d'un organigramme pour illustrer la première méthode,
- la figure 3, un récepteur pour la mise en oeuvre du procédé selon l'invention selon la première méthode,
- la figure 4, les différentes étapes du procédé selon l'invention sous la forme d'un organigramme pour illustrer la deuxième méthode,
- La figure 5, un récepteur pour la mise en oeuvre du procédé de l'invention selon la deuxième méthode.

Le principe de l'invention est d'effectuer une radiogoniométrie en utilisant les séquences d'apprentissage insérées dans la forme d'onde. Deux méthodes peuvent être mises en oeuvre.

La première méthode consiste, pour retrancher la contribution d'une source donnée, à effectuer une estimation de canal sur la séquence d'apprentissage associée à cette source. L'estimation de canal permet de retrancher la contribution de cette source sur les signaux capteurs, et d'effectuer la goniométrie en présence d'une source en moins. Si toutes les séquences d'apprentissage sont. synchronisées, il est possible, pour chacune des M sources parvenant sur le réseau, de déterminer le signal associé, en retranchant la contribution des M-1 autres sources, après avoir effectué une estimation de canal sur ces M-1 sources.

Une deuxième méthode consiste à calculer les vecteurs contenant l'information spatiale de chacun des trajets associés à la source goniométrée (dite source utile), avec une influence minimale des M-1 autres sources. Ces vecteurs sont calculés dans un premier temps à l'aide de la séquence d'apprentissage de la source utile, soit en effectuant une corrélation entre les vecteurs signaux capteurs et la séquence d'apprentissage sur chacune des positions correspondant à la longueur de la réponse impulsionnelle du canal utile, soit en effectuant une estimation de canal utile sur chacun des capteurs. L'analyse de goniométrie est effectuée sur les vecteurs issus de ces corrélations, soit en utilisant les vecteurs obtenus sur les séquences d'apprentissage de plusieurs trames consécutives, soit en intégrant les résultats dans une matrice de corrélation calculée sur les vecteurs obtenus sur plusieurs trames consécutives. Cette méthode est intéressante lorsque les corrélations entre les séquences de référence associés aux différentes sources sont faibles, c'est-à-dire typiquement dans le cas des transmissions en mode CDMA (Code Division Multiple Access). Cependant pour un système tel que le système GSM, cette méthode peut donner des résultats décevants, car la corrélation temporelle entre les séquences d'apprentissage peut être élevée et il vaut mieux dans ce cas utiliser la première méthode.

Suivant l'une ou l'autre des deux méthodes, lorsque deux émissions parviennent sur le réseau, la goniométrie est réalisée alternativement sur l'une puis sur l'autre émission. Lorsque la goniométrie est réalisée sur une émission, celle-ci est dite signal utile, et l'autre émission est dite signal brouilleur.

L'exemple de mise en oeuvre de la première méthode est décrit ci-après dans une application GSM utilisant une modulation GMSK (indice ½ et BT=0,3) avec une période symbole égale à 48/13µs. Les symboles transmis sur les canaux de trafic sont constitués, comme le montre la figure 1, en trames de 148 symboles composées chacune de deux séquences $S_1$, $S_2$ de 3 bits de bourrage disposés à leurs extrémités, d'une séquence d'apprentissage $S_3$ composée de 26 bits connus disposée en milieu de trame et de deux séquences $S_4$, $S_5$ de 58 bits d'information chacune disposées de part et d'autre de la séquence d'apprentissage $S_3$.

La modulation GMSK est une modulation à phase continue qui peut s'exprimer de façon approchée sous la forme d'une modulation linéaire, comme cela est défini dans l'article ayant pour titre « Exact and approximate construction of digital phase modulations by superposition of amplitude modulated pulse (AMP) » publiée dans IEEE Transactions on Communications Vol. 34 (1986) pp 150-160 ayant pour auteur P.A. LAURENT.

Dans une modulation GMSK le signal modulé z(t) peut s'écrire sous la forme d'un produit de convolution suivant la relation :

$$z(t) = \left( \sum_n s_n \delta(t) \right) * C_0(t) = s(t) * C_0(t) \qquad (1)$$

avec

$$s(t) = \sum_n s_n \delta(t)$$

Dans la relation (1) la suite $\{S_n\}$ est celle des symboles transmis, $C_0$ (t) est la première fonction principale de la modulation GMSK et δ(t) est l'impulsion de Dirac.

La suite $\{S_n\}$ est utilisée pour effectuer l'estimation de canal. En désignant par $\{d_n\}$ la suite des bits transmise pour une source donnée, prenant les valeurs « 0 » ou « 1 », les données correspondantes $d_n$ sont codées différentiellement avant d'être modulées. L'information transmise est constituée par la suite $\{a_n\}$, calculée à partir de la suite $\{d_n\}$ par les formules suivantes :

$$a_n = 1 \text{ si } d_n = d_{n-}, \text{ et } a_n = -1 \text{ si } d_n \neq d_{n-1}$$

Dans la relation (1), les symboles $S_n$ s'écrivent :

$$S_n = j^n b_n \quad \text{avec } b_n = \prod_{k \le n} a_k \qquad (2)$$

Dans le cadre de l'invention le signal brouilleur z(t) arrive sur le réseau d'antennes de réception formé de K capteurs, après son passage dans le canal de propagation radiomobile. Le signal multicapteur s'écrit :

$$\vec{X}(t) = [x_1(t),...,x_k(t)]^T = s(t) * \vec{G}(t) + \vec{X}_u(t), \qquad (3),$$

où :

- s(t) est le signal brouilleur,
- $\vec{G}(t)$ est le canal multicapteurs brouilleur reçu, constitué de la forme d'onde globale émission $C_0(t)$, du filtre émission, du canal de propagation et du filtre de réception,
- $x_i(t)$ est le signal reçu sur le capteur i,
- $\vec{X}_u(t)$ est la contribution du signal utile et du bruit de fond qui doit être estimée en retranchant la contribution estimée du signal brouilleur.
- $\vec{X}(t)$ peut aussi s'écrire en fonction des symboles transmis :

$$\bar{X}(t) = \sum_n s_n \, \bar{G}(t - nTs) + \bar{X}_u(t). \qquad (4)$$

où Ts est la période-symbole.

Au cours de la première étape 1 qui est représentée à la figure 2, les signaux reçus sur le réseau d'antennes sont numérisés, transposés en bande de base, puis filtrés par un filtre de réception par tout procédé connu non représenté. Cette étape fournit un signal complexe échantillonné à une fréquence $F_e$ multiple de la fréquence symbole Fs. L'étape 2 suivante effectue une synchronisation du récepteur sur le signal complexe obtenu, suivant par exemple le procédé décrit dans la demande de brevet Français n° 2 715 488 déposée au nom de la demanderesse et ayant pour titre « procédé de synchronisation en présence de brouilleurs et de multitrajets » ou tout autre procédé permettant une synchronisation en présence de brouilleurs et de multitrajets.

La synchronisation permet de positionner le récepteur de telle sorte que le signal reçu $\bar{X}(nTe)$ s'exprime en

fonction du signal brouilleur émis s(nTe),s[(n-1)Te],...,s[(n-L +1)]Te

où L représente la longueur (en nombre d'échantilions) du canal de propagation brouilleur prise en compte lors de l'estimation de canal et Te est la période d'échantillonnage par la relation :

$$\bar{X}(n\,Te) = \sum_{p=0}^{L-1} s[(n-p)Te]\,\bar{G}(p\,Te) + \bar{X}_u(nTe) \qquad (5)$$

Les échantillons du signal brouilleur s(nTe) s'expriment lorsque le signal est suréchantillonné d'un facteur 2 par rapport à la fréquence symbole à partir des symboles brouilleur émis par les relations :

$$s[(2n)Te] = s_n \text{ et } s[(2n+1)Te] = 0$$

Une estimation du canal brouilleur $\vec{G}(t)$ et de la matrice de corrélation du signal utile plus bruit ($R_u$) a lieu à l'étape 3. Cette estimation est réalisée suivant trois sous étapes, une sous étape d'estimation du canal brouilleur sur chacune des voies d'entrée, une sous étape d'estimation des échantillons de signal utile plus bruit sur chacune des voies d'entrée et une sous étape d'estimation de la matrice de corrélation du signal utile Ru.

L'estimation du canal brouilleur sur chacune des voies d'entrée est effectuée en considérant que le vecteur $\vec{G}k$ est constitué à partir des échantillons temporels du canal de propagation brouilleur sur la voie k suivant la relation.

$$\vec{G}_k = (g_k(0),...,g_k[(L-1)Te])^T. \qquad (6)$$

où $g_k(t)$ représente le canal brouilleur obtenu sur la voie k.

En notant :

$$\bar{S}(nTe) = \{s(nTe),...,s[(n-L+1)Te]\}^T$$

le vecteur formé à l'aide des symboles brouilleurs connus de la séquence d'apprentissage, le signal reçu par l'antenne k s'écrit :

$$x_k(n\,Te) = \vec{G}_K^H\,\vec{S}(n\,Te) + x_{u,k}(n\,Te) \qquad (7)$$

où $x_{u,k}(n\,Te)$ représente les échantillons de signal utile+bruit reçus sur la voie k et où l'opérateur «H» représente l'opération de transposition-conjugaison.

L'estimation du canal sur la voie k est obtenue par la formule connue de Wiener :

$$\bar{G}_k = R_{ss}^{-1}\bar{r}_{sx} \qquad (8)$$

où la matrice de corrélation $R_{ss}$ et le vecteur d'intercorrélation $\vec{r}_{sx}$ sont estimés sur les 16 bits placés au centre de la séquence d'apprentissage (soit sur N = 32 échantillons lorsque Te = Ts/2) par l'estimateur classique non biaisé suivant les relations:

$$R_{SS} = \frac{1}{N}\sum_{n=0}^{N}\bar{S}(nTe)\,\bar{S}(nTe)^H$$
$$\bar{r}_{sx} = \frac{1}{N}\sum_{n=0}^{N}\bar{S}(nTe)\,x_k(nTe)^* \qquad (9)$$

Dans le système GSM, les séquences de corrélation sont choisies de façon à obtenir une annulation de la

fonction d'autocorrélation sur 5 symboles de part et d'autre de t=0. La matrice $R_{ss}$ est donc égale à la matrice identité et par suite l'estimation de canal est réalisée directement à partir de $\vec{r}_{sx}$ alors $\vec{G}_k=\vec{r}_{sx}$.

L'estimation des échantillons de signal utile plus bruit sur chacune des voies d'entrée est obtenue à partir de l'estimation du canal de propagation suivant la relation :

$$x_{u,k}(n\ Te) = x_k(n\ Te) - \vec{G}_k^H \vec{S}(n\ Te) \quad (10)$$

Lorsque le réseau reçoit M brouilleurs dont les séquences d'apprentissage sont synchronisées, sur chaque capteur k, les vecteurs $\bar{G}_{k,j}$ du canal de propagation de chaque brouilleur i sont estimés successivement par les formules (8) et (9), et les estimées des échantillons de (signal utile + bruit) sont obtenus par la formule :

$$x_{u,k}(n\ Te) = x_k(n\ Te) - \sum_{i=1}^{M} \bar{G}_{k,i}^{H} \bar{S}_i(n\ Te) \quad (11)$$

où $\vec{S}_i(n\ Te)$ est le vecteur formé à l'aide des symboles connus de la séquence d'apprentissage du brouilleur i.

On obtient ainsi une estimée du vecteur signal utile+bruit :

$$\vec{X}u(n\ Te) = [x_{u,1}(n\ Te), ..., x_{u,k}(n\ Te)]^T$$

pour les N échantillons utilisés par l'estimation de canal.

Lorsque la matrice de corrélation du signal utile est requise par la goniométrie, celle-ci s'obtient à partir des échantillons de (signal utile+bruit) estimés Xu(n Te) par l'estimateur classique non biaisé :

$$R_u = \frac{1}{N} \sum_{n=0}^{N} \bar{X}u(n\ Te) \bar{X}u(n\ Te)^H \quad (12)$$

Afin d'améliorer la qualité de l'estimation de la matrice de corrélation $R_u$., notamment en présence de fading sélectif en temps, il peut être intéressant d'estimer cette matrice sur plusieurs trames (suffisamment espacées pour obtenir des états de fading différents, mais suffisamment proches pour que les directions d'arrivée à estimer ne varient pas) et de faire la moyenne des estimées ainsi obtenues. La goniométrie du signal utile est effectuée à l'étape 4 à partir de l'estimation de la matrice de corrélation $R_u$. Elle peut être réalisée en utilisant tout type de méthode connue que celles-ci, soient à haute résolution, super résolution, formation de voies ou par interférométrie. Pour cette dernière méthode, seule l'estimation des échantillons signal utile + bruit est nécessaire, ...

Un récepteur pour la mise en oeuvre du procédé selon l'invention est représenté à la figure 3.

Celui-ci comporte :

- un dispositif 5 de réception du signal reçu sur chaque voie de réception, assorti de façon connue d'un dispositif non représenté pour assurer son passage en bande de base, son filtrage passe bas ainsi que sa numérisation,
- un dispositif 6 de synchronisation du signal sur la séquence de synchronisation associée au brouilleur,
- un dispositif 7 d'estimation du canal associé au signal brouilleur réalisée sur chacune des voies d'entrée,
- un dispositif 8 d'estimation des échantillons de signal utile couplé au dispositif 7 d'estimation du canal brouilleur pour retrancher la contribution du signal brouilleur sur la séquence de synchronisation associée au brouilleur.
- et un radiogoniomètre 9 pour la radiogoniométrie du signal utile couplé à la sortie du dispositif 8 d'estimation de signal utile. Le dispositif d'estimation 8 peut être réalisé à l'aide d'un microprocesseur pour réaliser les traitements de l'étape 3.

Le deuxième mode de réalisation de l'invention correspond au cas où les signaux X(t) qui représentent le signal multicapteurs reçu, s'exprime de la façon suivante à partir du signal s(t) formé suivant la formule (1) à partir des symboles émis par le signal utile :

$$\vec{X}(t) = [x_1(t), \ldots, x_K(t)]^T = s(t) * \vec{G}(t) + \vec{B}(t),$$

où

- $\vec{G}(t)$ est le canal multicapteur utile reçu, constitué de la forme d'onde globale émission $C_0(t)$, du filtre émission, du canal de propagation brouilleur $\vec{C}(t)$ et du filtre de réception,
- $x_i(t)$ est le signal reçu sur le capteur i,
- $\vec{B}(t)$ est la contribution des signaux brouilleurs et du bruit de fond.
- $\vec{X}(t)$ peut aussi s'écrire en fonction des symboles utiles transmis :

$$\vec{X}(t) = \sum_n s_n \vec{G}(t - nTs) + \vec{B}(t). \qquad (13)$$

où Ts est la période-symbole.

Le procédé se déroule alors suivant les étapes 10 à 13 de l'organigramme représenté à la figure 4. Il commence à l'étape 10 par la numérisation des signaux reçus et de leur filtrage suivant un processus similaire à celui déjà décrit lors de la première étape du procédé représenté à la figure 2. L'étape 11 suivante est une étape de synchronisation qui permet de positionner le récepteur de telle sorte que le signal reçu $\vec{X}(n\,Te)$ s'exprime en fonction du signal utile émis s(nTe), s[(n-1)Te], ..., s[(n-L+1)Te],
où L représente la longueur (en nombre d'échantillons) du canal de propagation utile prise en compte lors de l'estimation de canal et de la goniométrie par la relation :

$$\vec{X}(n\,Te) = \sum_{p=0}^{L-1} s[(n-p)Te]\,\vec{G}(p\,Te) + \vec{B}(nTe) \qquad (14)$$

La goniométrie est effectuée à l'étape 12 après avoir à l'étape 13 estimé des vecteurs contenant l'information spatiale associée aux trajets utiles.

Ces vecteurs sont utilisés en effectuant soit une corrélation entre le vecteur contenant les signaux capteurs et le signal utile émis sur la séquence de référence, soit une estimation du canal utile sur chacune des voies d'entrée.

Les vecteurs contenant l'information spatiale associée aux trajets utiles peuvent être obtenus en effectuant une corrélation entre le vecteur contenant les signaux capteurs et le signal utile émis sur la séquence de référence :

$$\vec{V}_k = \frac{1}{N}\sum_{n=0}^{N} \vec{X}(nTe)\, z((n-k)Te)^* \qquad (k=0, \ldots, L-1)\ (15)$$

L'estimation du canal utile sur chacune des voies d'entrée peut aussi être utilisée pour déterminer les vecteurs contenant l'information spatiale associée aux trajets utiles et a lieu en considérant $\vec{G}_k$ le vecteur constitué à partir des échantillons temporels du canal de propagation utile sur la voie k :

$$\vec{G}_k = (g_k(0), \ldots, g_k[(L-1)Te])^T \qquad (16)$$

où $g_k(t)$ représente le canal utile obtenu sur la voie k.

En notant : $\vec{S}(n\,Te) = \{s(n\,Te), \ldots, s[(n-L+1)Te]\}^T$ le vecteur formé à l'aide des symboles utiles connus de la séquence d'apprentissage, le signal reçu par l'antenne k s'écrit :

$$x_k(n\,Te) = \vec{G}_k^H \vec{S}(n\,Te) + b_k(n\,Te) \qquad (17)$$

L'estimation du canal utile sur la voie k est obtenue par la formule de Wiener utilisée lors de la première

méthode pour l'estimation du canal brouilleur (8) (9).

Les L vecteurs $\vec{V}_i$ (de dimension K) contenant l'information spatiale sont formés à partir des vecteurs $G_k$ de la facon suivante :

$$\left[\bar{V}_0 \ldots \bar{V}_{L-1}\right] = \left[\bar{G}_1^T \ldots \bar{G}_k^T\right]^T \quad (18)$$

A partir de l'estimation des vecteurs contenant l'information spatiale associée au signal utile, la goniométrie du signal utile peut être obtenue suivant quatre possibilités différentes :

Dans un premier cas, une goniométrie est mise en oeuvre pour chaque vecteur $\vec{V}_i$ (i = 0,.., L-1) :

Dans cette configuration, la goniométrie:

- permet de séparer tous les trajets décorrélés, chacun des trajets décorrélés étant associé à un vecteur $\vec{V}_i$ différent,
- doit séparer les trajets corrélés associés à un même vecteur $\vec{V}_i$.

Dans un deuxième cas, une goniométrie est effectuée à partir de la matrice de corrélation R calculée sur les vecteurs $\vec{V}_i$ obtenus sur une même trame par la relation :

$$R_i = \sum_n \bar{V}_i \bar{V}_i^H \quad (19)$$

Dans cette configuration, la goniométrie doit séparer tous les trajets associés à la source utile, que ceux-ci soient corrélés ou décorrelés.

Dans un troisième cas, une goniométrie est effectuée pour chaque position i à partir de la matrice de corrélation $R_1$ calculée sur les vecteurs $\vec{V}_{i,n}$ déterminés sur N trames (n=1,...N),

$$R_i = \sum_n \bar{V}_{i,n} \bar{V}_{i,n}^H \quad (20)$$

Dans cette configuration, la goniométrie, de même que dans le premier cas :

- permet de séparer tous les trajets décorrélés, chacun des trajets décorrélés étant associé à un vecteur $\vec{V}_i$ différent,
- doit séparer les trajets corrélés associés à un même vecteur $\vec{V}_i$.

L'intérêt d'effectuer la moyenne sur les résultats obtenus sur N trames est d'une part, d'atténuer les effets du fading et d'autre part, de décorréler temporellement (par l'effet Doppler lié au mouvement du véhicule) les trajets associés au même symbole.

Dans un quatrième cas, une goniométrie est effectuée à partir de la matrice de corrélation R obtenue en effectuant la moyenne des matrices dé corrélation $R_i$.

$$R = \sum_i R_i \quad (21)$$

Dans cette contiguration, de meme que dans le second cas, la goniométrie doit séparer tous les trajets associés à la source utile, que ceux-ci soient corrélés ou décorrélés. De même que dans le cas précédent, l'intérêt d'effectuer une moyenne des résultats obtenus sur N trames est d'une part, d'atténuer les effets du fading et d'autre part, de décorréler temporellement les trajets associés au même symbole.

Un récepteur pour la mise en oeuvre du deuxième mode de réalisation de l'invention est représenté à la figure 5. Il comprend un dispositif de réception 14 du signal reçu sur chaque voie de réception, assorti de façon connue par un dispositif, non représenté, pour assurer le passage du signal en bande de base, son filtrage passe bas ainsi que sa numérisation. Un dispositif 15 assure la synchronisation du signal sur la séquence de synchronisation associée au signal utile suivant l'étape 11 du procédé. Un goniomètre 16 couplé en sortie du dispositif de réception 14, assure la

goniométrie du signal utile à partir des vecteurs d'information spatiale fournis par un dispositif d'estimation 17 couplé au dispositif de synchronisation 15. La mise en oeuvre du dispositif d'estimation 17 peut être faite à l'aide d'un microprocesseur programmé pour réaliser les traitements de l'étape 13.

**Revendications**

1. Procédé de radiogoniométrie coopérative en transmission dans un récepteur de radiogoniométrie pour système de radiocommunication comportant plusieurs sources d'émission, le récepteur étant du type comportant un réseau de capteurs couplé à un radiogoniomètre **caractérisé en ce qu'**il comporte :

   - une première étape consistant à numériser (5,14) le signal reçu par chaque capteur,
   - une deuxième étape consistant à effectuer une prise de synchronisation (6, 15) sur les signaux issus de la première étape;
   - et une troisième étape consistant (7, 8, 17), à partir des séquences d'apprentissage insérées dans les formes d'ondes émises par chaque source, à isoler la contribution de chaque source dans les signaux capteurs afin de n'effectuer la goniométrie que sur une seule source.

2. Procédé selon la revendication 1 **caractérisé en ce que** le signal reçu est un signal modulé suivant une modulation linéaire ou pouvant être approximé comme tel comportant des trames formées de séquences d'apprentissage connues du récepteur et de séquences d'information utile.

3. Procédé selon l'une quelconque des revendications 1 et 2, **caractérisé en ce qu'**il consiste pour effectuer la goniométrie sur un signal utile en présence d'au moins une source de signal brouilleur à effectuer le traitement suivant :

   - estimation du canal brouilleur (7) sur tous les capteurs,
   - estimation du signal utile (8) sur tous les capteurs en retranchant la contribution du signal brouilleur aux signaux capteurs à l'aide des estimées des canaux brouilleurs obtenues sur chaque capteur,
   - goniométrie (9) sur les échantillons de signal utile estimé.

4. Procédé selon l'une quelconque des revendications 1 à 3, **caractérisé en ce qu'**il consiste, lorsqu'il y a plusieurs brouilleurs, à synchroniser (6) entre elles les séquences d'apprentissage de l'ensemble de ces signaux pour estimer les canaux associés à toutes les sources brouilleurs, et estimer le signal utile en retranchant la contribution de toutes les sources de brouilleurs.

5. Procédé selon l'une quelconque des revendications 1 et 2, **caractérisé en ce qu'**il consiste pour effectuer la goniométrie (6) d'un signal dit utile en présence de signaux dits brouilleurs, à effectuer le traitement suivant sur la séquence d'apprentissage du signal utile :

   - calcul (13) des vecteurs contenant l'information spatiale de chacun des trajets associés au signal utile sur la séquence d'apprentissage du signal utile,
   - goniométrie (12) à partir des vecteurs ainsi estimés.

6. Procédé selon la revendication 5 **caractérisé en ce que** les vecteurs sont obtenus par corrélation entre les vecteurs signaux et la séquence d'apprentissage sur la longueur de la réponse impulsionnelle du canal utile.

7. Procédé selon la revendication 5 **caractérisé en ce que** les vecteurs sont déterminés à partir d'une estimation de canal réalisée sur chacune des voies.

8. Procédé selon l'une quelconque des revendications 5, 6 et 7, **caractérisé en ce que** la goniométrie (12) est effectuée sur chacun des vecteurs d'information spatiale estimés sur une trame donnée.

9. Procédé selon l'une quelconque des revendications 5, 6 et 7, **caractérisé en ce que** la goniométrie (12) est effectuée en calculant la matrice de corrélation sur l'ensemble des vecteurs d'information spatiale estimés sur une trame donnée.

10. Procédé selon l'une quelconque des revendications 5, 6 et 7, **caractérisé en ce que** la goniométrie (12) est

effectuée en estimant les vecteurs d'information spatiale sur plusieurs trames, en calculant une matrice de corrélation pour chaque trajet associé au signal utile en prenant en compte les vecteurs correspondants sur chaque trame.

**11.** Procédé selon l'une quelconque des revendications 5, 6 et 7, **caractérisé en ce que** la goniométrie (12) est effectuée à partir de la matrice de corrélation obtenue en calculant la moyenne des matrices de corrélation de chaque trajet.

**12.** Dispositif pour la mise en oeuvre du procédé selon l'une quelconque des revendications 1 à 4, **caractérisé en ce qu'**il comprend un dispositif de réception (5) pour la numérisation des signaux reçus, un dispositif de synchronisation (6) sur les séquences d'apprentissage associées aux sources de brouilleurs, un dispositif d'estimation (7) dé canal associé du signal brouilleur couplé à un dispositif d'estimation de signal utile (8) sur tous les capteurs pour retrancher la contribution du signal brouilleur sur la séquence d'apprentissage associée au brouilleur et un radiogoniomètre (9) pour la radiogionomètrie du signal utile couplé à la sortie du dispositif d'estimation (8) du signal utile.

**13.** Dispositif pour la mise en oeuvre du procédé selon l'une quelconque des revendications 5 à 11, **caractérisé en ce qu'**il comprend un dispositif de réception (14) pour la numérisation des signaux reçus, un dispositif de synchronisation (15) sur séquences de synchronisation associées au signal utile, un dispositif d'estimation de vecteur d'information spatiale utile (17) sur la séquence d'apprentissage du signal utile et un radiogoniomètre (16) couplé en sortie du dispositif de réception (14) pour effectuer une goniométrie de signal utile à partir des vecteurs d'information spatiale fournis par le dispositif d'estimation (17).

## Patentansprüche

**1.** Verfahren zur kooperativen Funkpeilung eines Senders in einem Peilempfänger für ein Funknachrichtensystem mit mehreren Sendequellen, wobei der Empfänger ein Netz von Antennensonden besitzt, das mit einem Funkpeilgerät gekoppelt ist, **dadurch gekennzeichnet, daß** es aufweist:

- einen ersten Schritt bestehend aus der Digitalisierung (5, 14) des von jeder Sonde empfangenen Signals,
- einen zweiten Schritt, in dem die Synchronisierung (6, 15) der im ersten Schritt erhaltenen Signale erfolgt,
- und einen dritten Schritt, in dem ausgehend von den von jeder Quelle ausgesendeten und in die Wellenformen eingefügten Lernsequenzen der Beitrag jeder Quelle zu den Sondensignalen isoliert wird (7, 8, 17), um die Peilung nur bezüglich einer einzigen Quelle durchzuführen.

**2.** Verfahren nach Anspruch 1, **dadurch gekennzeichnet, daß** das Empfangssignal ein gemäß einer linearen oder angenähert linearen Modulation moduliertes Signal ist, das Rahmen enthält, die von dem Empfänger bekannten Lernsequenzen und von Nutzinformationssequenzen gebildet werden.

**3.** Verfahren nach einem beliebigen der Ansprüche 1 und 2, **dadurch gekennzeichnet, daß** es zur Durchführung der Peilung anhand eines Nutzsignals in Anwesenheit von mindestens einer Störsignalquelle darin besteht, die folgende Bearbeitung durchzuführen:

- Schätzung (7) des Störkanals an allen Sonden,
- Schätzung (8) des Nutzsignals an allen Sonden, indem der Beitrag des Störsignals zu den Sondensignalen mithilfe der Schätzung der an jeder Sonde erhaltenen Störkanäle abgezogen wird,
- Peilung (9) hinsichtlich der Tastproben des geschätzten Nutzsignals.

**4.** Verfahren nach einem beliebigen der Ansprüche 1 bis 3, **dadurch gekennzeichnet, daß**, wenn mehrere Störquellen vorhanden sind, die Lernsequenzen der Gesamtheit dieser Signale miteinander synchronisiert werden (6), um die allen Störquellen zugeordneten Kanäle zu schätzen und das Nutzsignal zu schätzen, indem der Beitrag aller Störquellen abgezogen wird.

**5.** Verfahren nach einem beliebigen der Ansprüche 1 und 2, **dadurch gekennzeichnet, daß** es darin besteht, für die Durchführung der Peilung (6) eines Nutzsignals in Gegenwart von Störsignalen die Lernsequenz des Nutzsignals der folgenden Bearbeitung zu unterwerfen:

- Berechnung (13) der die räumliche Information jeder der dem Nutzsignal zugeordneten Übertragungsstrecken enthaltenen Vektoren aus der Lernsequenz des Nutzsignals,
- Peilung (12) aufgrund der so geschätzten Vektoren.

**6.** Verfahren nach Anspruch 5, **dadurch gekennzeichnet, daß** die Vektoren durch Korrelation zwischen den Signalvektoren und der Lernsequenz über die Länge der Impulsantwort des Nutzsignals erhalten werden.

**7.** Verfahren nach Anspruch 5, **dadurch gekennzeichnet, daß** die Vektoren aufgrund einer auf jedem der Empfangswege durchgeführten Kanalschätzung bestimmt werden.

**8.** Verfahren nach einem beliebigen der Ansprüche 5, 6 und 7, **dadurch gekennzeichnet, daß** die Peilung (12) aufgrund jedes der anhand eines gegebenen Rahmens geschätzten räumlichen Informationsvektoren durchgeführt wird.

**9.** Verfahren nach einem beliebigen der Ansprüche 5, 6 und 7, **dadurch gekennzeichnet, daß** die Peilung (12) durch Berechnung der Korrelationsmatrix über die Gesamtheit der bezüglich eines gegebenen Rahmens geschätzten räumlichen Informationsvektoren durchgeführt wird.

**10.** Verfahren nach einem beliebigen der Ansprüche 5, 6 und 7, **dadurch gekennzeichnet, daß** die Peilung (12) durch Schätzung der räumlichen Informationsvektoren über mehrere Rahmen durchgeführt wird, indem eine Korrelationsmatrix für jede dem Nutzsignal zugeordnete Übertragungsstrecke unter Berücksichtigung der entsprechenden Vektoren in jedem Rahmen berechnet wird.

**11.** Verfahren nach einem beliebigen der Ansprüche 5, 6 und 7, **dadurch gekennzeichnet, daß** die Peilung (12) ausgehend von der Korrelationsmatrix durchgeführt wird, die durch Berechnung des Mittelwerts der Korrelationsmatrizen jeder Übertragungsstrecke erhalten wird.

**12.** Vorrichtung zur Durchführung des Verfahrens nach einem beliebigen der Ansprüche 1 bis 4, **dadurch gekennzeichnet, daß** sie eine Empfangsvorrichtung (5) zur Digitalisierung der empfangenen Signale, eine Synchronisationsvorrichtung (6) zur Synchronisierung auf die den Störquellen zugeordneten Lernsequenzen zu synchronisieren, eine Vorrichtung (7) zum Schätzen des dem Störsignal zugeordneten Kanals, die an eine Vorrichtung zum Schätzen des Nutzsignals (8) an allen Sonden gekoppelt 1st, um den Beitrag des Störsignals zur der Störquelle zugeordneten Lernsequenz abzuziehen, und ein an den Ausgang der Schätzvorrichtung (8) für das Nutzsignal gekoppeltes Funkpeilgerät (9) für die Peilung des Nutzsignals aufweist.

**13.** Vorrichtung zur Durchführung des Verfahrens nach einem beliebigen der Ansprüche 5 bis 11, **dadurch gekennzeichnet, daß** es eine Empfangsvorrichtung (14) zur Digitalisierung der empfangenen Signale, eine Vorrichtung (15) zur Synchronisierung auf dem Nutzsignal zugeordnete Lernsequenzen, eine Vorrichtung (17) zur Schätzung des räumlichen Nutzinformations-Vektors aufgrund der Lernsequenz des Nutzsignals und ein Funkpeilgerät (16) enthält, das an den Ausgang der Empfangsvorrichtung (14) gekoppelt ist, um eine Peilung des Nutzsignals ausgehend von den von den räumlichen Informationsvektoren durchzuführen, die von der Schätzvorrichtung (17) geliefert werden.

## Claims

**1.** Process of cooperative radio direction finding in transmission mode in a radio direction finding receiver for radio communication system comprising several emission sources, the receiver being of the type comprising a network of sensors coupled to a radio direction finder **characterized in that** it comprises:

- a first step consisting in digitizing (5, 14) the signal received by each sensor,
- a second step consisting in performing a capture of synchronization (6, 15) on the signals emanating from the first step;
- and a third step consisting (7, 8, 17), on the basis of the learning sequences inserted into the waveforms emitted by each source, in isolating the contribution of each source in the sensor signals so as to perform the direction finding on a single source only.

**2.** Process according to Claim 1, **characterized in that** the signal received is a signal modulated according to a linear

modulation or one which can be approximated as such comprising frames formed of learning sequences known to the receiver and of useful information sequences.

**3.** Process according to either of Claims 1 and 2, **characterized in that** it consists, for performing the direction finding on a useful signal in the presence of at least one jammer signal source, in performing the following processing:

- estimating the jammer channel (7) on all the sensors,
- estimating the useful signal (8) on all the sensors by deducting the contribution of the jammer signal from the sensor signals with the aid of the jammer channel estimates obtained on each sensor,
- direction finding (9) on the samples of estimated useful signal.

**4.** Process according to any one of Claims 1 to 3, **characterized in that** it consists, when there are several jammers, in mutually synchronizing (6) the learning sequences for the entire set of these signals so as to estimate the channels associated with all the jammer sources and estimating the useful signal by deducting the contribution of all the sources of jammers.

**5.** Process according to either of Claims 1 and 2, **characterized in that** it consists, for performing the direction finding (6) of a so-called useful signal in the present of so-called jammer signals, in performing the following processing on the learning sequence of the useful signal:

- calculating (13) vectors containing the spatial information of each of the paths associated with the useful signal on the learning sequence of the useful signal,
- direction finding (12) on the basis of the vectors thus estimated.

**6.** Process according to Claim 5, **characterized in that** the vectors are obtained by correlation between the signal vectors and the learning sequence over the length of the impulse response of the useful channel.

**7.** Process according to Claim 5, **characterized in that** the vectors are determined from channel estimation carried out on each of the pathways.

**8.** Process according to any one of Claims 5, 6 and 7, **characterized in that** the direction finding (12) is performed on each of the spatial information vectors estimated on a given frame.

**9.** Process according to any one of Claims 5, 6 and. 7, **characterized in that** the direction finding (12) is performed by calculating the correlation matrix over the set of spatial information vectors estimated on a given frame.

**10.** Process according to any one of Claims 5, 6 and 7, **characterized in that** the direction finding (12) is performed by estimating the spatial information vectors over several frames, by calculating a correlation matrix for each path associated with the useful signal, taking into account the corresponding vectors on each frame.

**11.** Process according to any one of Claims 5, 6 and 7, **characterized in that** the direction finding (12) is performed on the basis of the correlation matrix obtained by calculating the average of the correlation matrices of each path.

**12.** Device for implementing the process according to any one of Claims 1 to 4, **characterized in that** it comprises a reception device (5) for digitizing the signals received, a device (6) for synchronizing on the learning sequences associated with the jammer sources, an associated channel estimation device (7) of the jammer signal coupled to a useful signal estimation device (8) on all the sensors so as to deduct the contribution of the jammer signal on the learning sequence associated with the jammer and a radio direction finder (9) for the radio direction finding of the useful signal coupled to the output of the device (8) for estimating the useful signal.

**13.** Device for implementing the process according to any one of Claims 5 to 11, **characterized in that** it comprises a reception device (14) for digitizing the signals received, a device (15) for synchronizing on synchronization sequences associated with the useful signal, a useful spatial information vector estimation device (17) on the learning sequence of the useful signal and a radio direction finder (16) which is coupled at the output of the reception device (14) so as to perform a useful signal direction finding on the basis of the spatial information vectors provided by the estimation device (17).

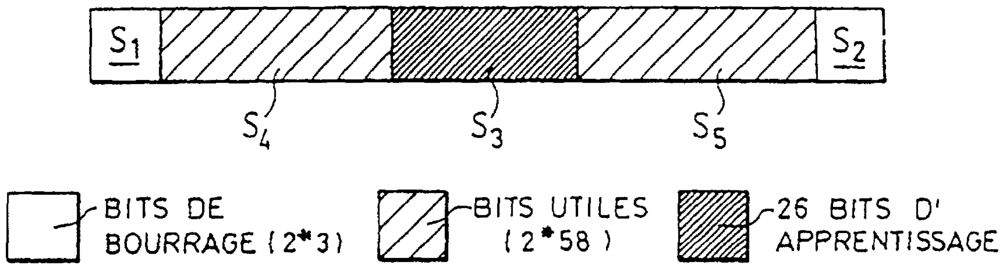
S1
S2
S4
S3
S5
BITS DE BOURRAGE (2*3)
BITS UTILES (2*58)
26 BITS D' APPRENTISSAGE

FIG.1

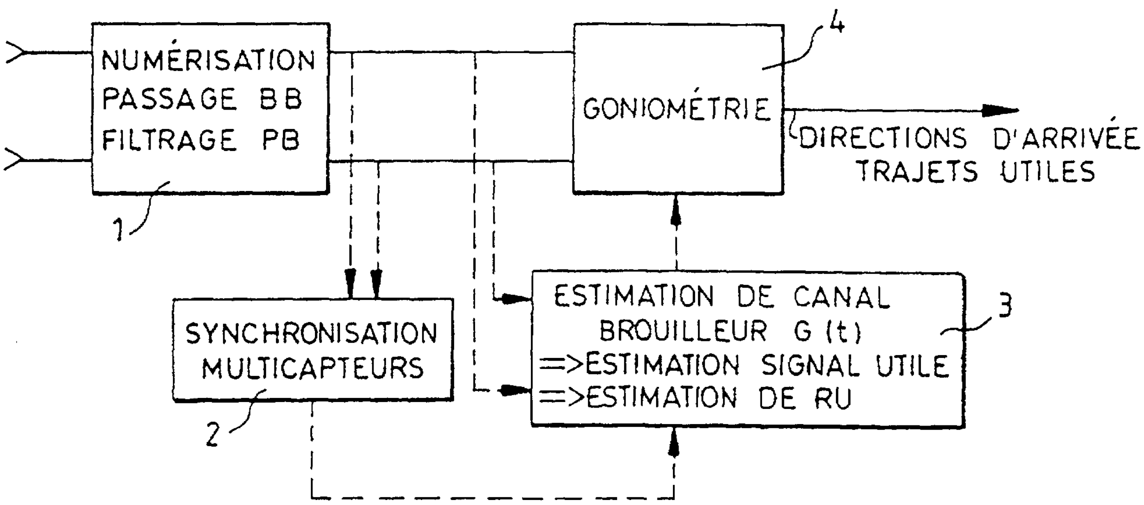
NUMÉRISATION
PASSAGE BB
FILTRAGE PB
1
GONIOMÉTRIE
4
DIRECTIONS D'ARRIVÉE TRAJETS UTILES
SYNCHRONISATION MULTICAPTEURS
2
ESTIMATION DE CANAL
BROUILLEUR G (t)
=>ESTIMATION SIGNAL UTILE
=>ESTIMATION DE RU
3

FIG. 2

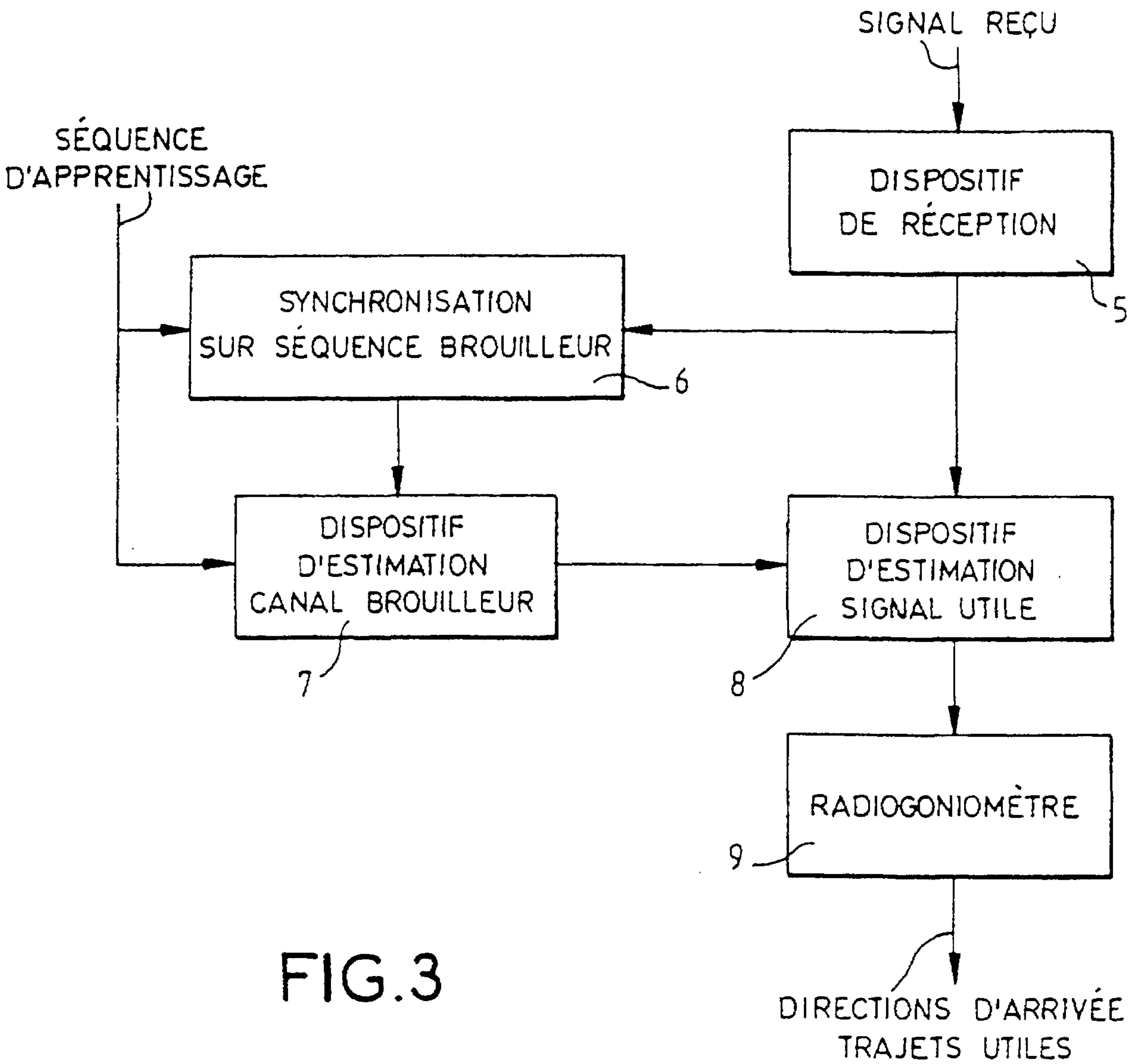
SIGNAL REÇU
SÉQUENCE D'APPRENTISSAGE
DISPOSITIF DE RÉCEPTION
5
SYNCHRONISATION SUR SÉQUENCE BROUILLEUR
6
DISPOSITIF D'ESTIMATION CANAL BROUILLEUR
7
DISPOSITIF D'ESTIMATION SIGNAL UTILE
8
RADIOGONIOMÈTRE
9
DIRECTIONS D'ARRIVÉE TRAJETS UTILES

FIG.3

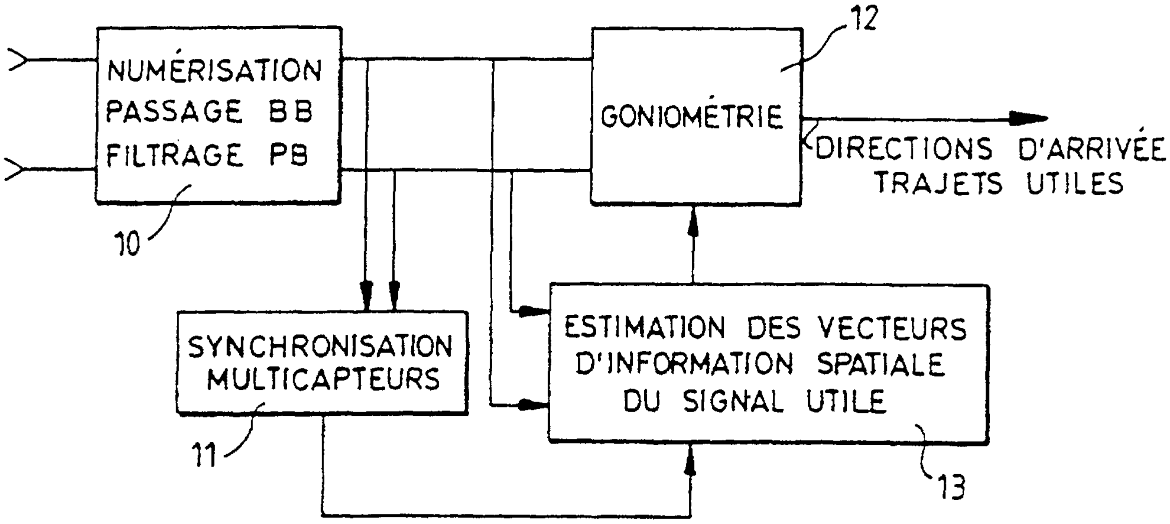
NUMÉRISATION
PASSAGE BB
FILTRAGE PB
10
GONIOMÉTRIE
12
DIRECTIONS D'ARRIVÉE
TRAJETS UTILES
SYNCHRONISATION
MULTICAPTEURS
11
ESTIMATION DES VECTEURS
D'INFORMATION SPATIALE
DU SIGNAL UTILE
13

FIG.4

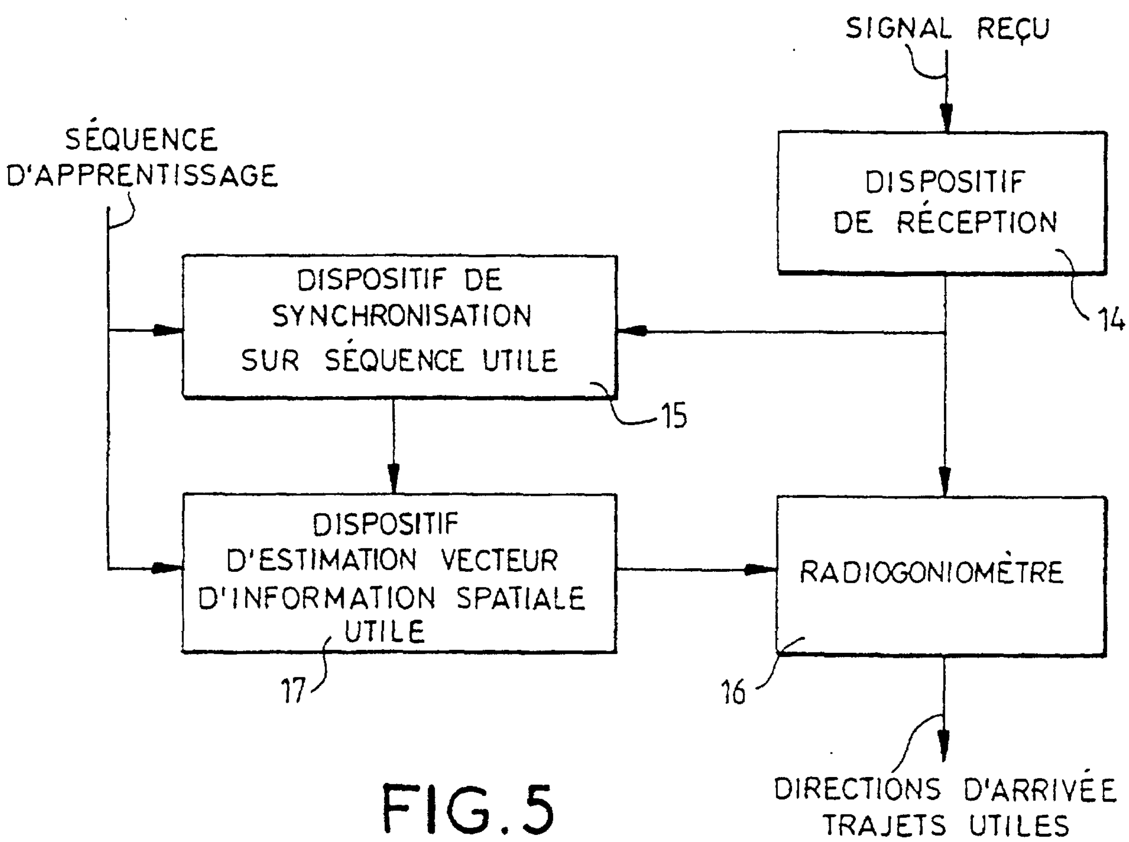
SIGNAL REÇU
SÉQUENCE
D'APPRENTISSAGE
DISPOSITIF
DE RÉCEPTION
14
DISPOSITIF DE
SYNCHRONISATION
SUR SÉQUENCE UTILE
15
DISPOSITIF
D'ESTIMATION VECTEUR
D'INFORMATION SPATIALE
UTILE
17
RADIOGONIOMÈTRE
16
DIRECTIONS D'ARRIVÉE
TRAJETS UTILES

FIG.5